# EUROPEAN PATENT SPECIFICATION

(11) **EP 2 253 658 B1**
(45) Date of publication and mention of the grant of the patent: **09.05.2012**
(21) Application number: 10160253.0
(22) Date of filing: 19.04.2010
(51) Int. Cl.: C08J 3/12, C08L 3/02, C08K 5/00, A43B 1/00

(54) **Biodegradable plastic material**
Biologisch abbaubare Kunststoffmaterialien
Matières plastiques biodégradables

(30) Priority: 20.04.2009 IT AN20090016
(43) Date of publication of application: 24.11.2010
(73) Proprietor: Errepi S.r.l., 63014 Montegranaro (Fermo) (IT)
(72) Inventor: CATINARI, Madrisano, 62012, CIVITANOVA MARCHE (MACERATA) (IT)
(74) Representative: Faggioni, Carlo Maria

(56) References cited:
- WO-A2-2005/021633
- DE-A1- 19 802 718
- FR-A1- 2 856 405
- US-A1- 2006 255 507

## Description

The present invention refers to a biodegradable plastic material, obtainable very simply at an extremely low cost and having physical features not below those of ordinary, synthetic plastic materials. In particular, the plastic material according to the present invention is as flexible as the majority of fully-synthetic plastic materials.

Plastic materials have unique properties and are used in endless applications. Moreover, hygiene provisions exist which in fact impose the use thereof for disposable objects (for example syringes) or as packaging. This extended use causes great disposal problems, even though, due to the undestructability features of these materials, not pollution, but rather environmental littering is the problem.

The disposal of plastic materials, when they become waste, is an extremely serious problem, since, as stated before, the majority of polymers are not degradable and the combustion of a good deal thereof produces very toxic agents.

It has been attempted to recycle some among the main plastic materials to reuse them in the preparation of other objects of the same material. Unfortunately, the majority of such materials cannot be recycled, at least not completely, and they can be charged only in limited amounts in the moulding mixture and only following costly and complex separation operations.

It has also been attempted to synthesise a so-called biodegradable plastic material which, in actual fact, is simply a water-soluble polymer. However, put to the test, this material proves to be a pollutant, since it seeps into the ground water tables becoming a solution, and cannot be effectively separated from drinking water which, in the long run, may be polluted by its presence. Moreover, the opportunity of dissolving these materials into water reduces its usability. Also the use of light-degradable materials has the same drawbacks, since they disperse into the soil and can even enter food crops.

A remarkable progress has been achieved by plastic materials synthesised from corn starch, such as the one sold under the trade name "Mater Bi". However, such material are generally rigid and fragile and are therefore not suited to the use in applications in which elasticity and softness are required.

The same inventor of the present invention had tried to solve these problems by mixing the corn-starch-based material with recyclable plasticisers (PCT/IT2005/000166). However, effective in degrading part of said material as it may be, such invention did not allow to avoid the release into the environment of non-degradable substances. In the effort of overcoming these drawbacks, with Italian patent application no. AN2008A 000024 the same inventor replaced recyclable plasticisers with vegetable materials.

Despite the sure success of the solutions already devised by the inventor, the materials at play are rather expensive, in the light of the cost of obtaining plastic materials which require - as a preliminary operation to the manufacturing thereof - corn starch isolation. This implies considerable water consumption, with economic and environmental problems.

US 5 882 713 refers to the use of flour and plasticiser to accomplish a solid substance for coatings.

US 1 384 917 refers to the use of a rice flour, with the addition of aluminium sulphate, to produce a glue which can be used also to obtain artificial flowers.

DE 19 802 718 concerns a mixture of flours and polymers (among which polyurethane) to create compostable polymer compositions. However, the degradation speed of these compositions is excessively slow and incomplete.

FR 2 856 405 concerns the manufacture of a plastic material consisting of a flour and of a thermoplastic polymer exhibiting rheological properties similar to those of (possibly modified) flour.

US 6 025 417 concerns the manufacture of a polymer consisting of a thermoplastic polymer and of a starch.

US 2006/0255507A1 refers to a process for forming a biodegradable material by forming a pregelled starch suspension and by adding thereto a homogeneous mixture containing at least wood fibres and by moulding the composition.

WO 2005/021633 refers to a composition for use in making biodegradable food service containers comprising water, starch, fibres, a wax emulsion and a fibre sizing agent.

The drawbacks set forth above are brilliantly solved by the present invention which refers to biodegradable plastic material, comprising a natural thermoplastic polymer consisting of a single or multi-cereal flour, a natural plasticiser and one or more synthetic polymer and/or copolymer resins, characterised in that it further comprises casein.

The present invention accomplishes a biodegradable plastic material using a cereal flour as thermoplastic material. Any type of flour of any type of cereal can be used. Preferably, the flour obtained from one or more cereals chosen among wheat, corn, buckwheat, barley, millet, rye, oats, sorghum, spelt, rice, cassava is used. Particularly preferred is the flour marketed by Limagrain under the name Biolice which consists of a mixture of wheat and corn flours with a biodegradable synthetic polymer.

The thermoplastic material is necessarily enriched with an amount of natural plasticisers, preferably vegetable oils. As natural plasticisers one or more plasticisers chosen among rapeseed oil, soy bean oil, palm oil, sunflower oil and citric acid esters are preferred.

Another component consists of synthetic polymer and/or copolymer resins, preferably polyurethane resins.

Advantageously, other additives can be added to the plastic material of the present invention, such as expanders, dyes, fragrances, all of natural origin and/or of food grade. According to the present invention, casein is also added. Casein is capable of binding to the polymer chains of the resin and has the property of accelerating resin degradation.

Particularly preferred is a material comprising 50% by weight of cereal flour, 30% by weight of plasticiser, 10% by weight of resin, 9% by weight of casein and expander, dye and perfume q.b.

For the preparation of the plastic material according to the present invention, the constituents are dry-mixed in a suitable device, for example an Archimedean-screw mixer. Mixing occurs at room temperature. Once the mixing has occurred, the mix is caused to pass through a draw-plate, normally heated at a temperature ranging between 100 and 170°C, obtaining extruded granules, which are immediately air-cooled or water-cooled and packaged in suitable bags or large bags. Upon use, the granules are injection-moulded into the desired shape, generally at a temperature ranging between 100 and 150°C, preferably at 130-140°C.

The material according to the present invention can be easily disposed of through composting, having a degradation exceeding 90% by weight after 180 days, as provided by the European law to be able to use the wording "biodegradable". Under ordinary conditions, the material according to the present invention is perfectly stable to the main chemical and atmospheric agents, with elasticity properties equal - when not occasionally even exceeding - those of ordinary synthetic plastic materials.

Given its flexibility and softness and its versatility, the material according to the present invention can find the most disparate applications. In particular it can be used to manufacture shoe soles, boots, clogs, slippers (including flip-flops), belts, bags, adhesive tape, plasters, bottles and containers, watch straps, book and exercise-book covers, children's toys, furnishing items, car inner parts, stoppers, key-rings, small household tools, medical apparatuses, pens, glass frames.

In the following some application examples are described, which do not have the purpose of defining and limiting the invention, but only of illustrating it more in detail.

### EXAMPLE 1

In an Archimedean-screw mixer 50 kg of a mixture of corn and wheat flours, 30 kg of ethyl citrate, 11 kg of polyurethane resin, 3 kg of food-grade casein, 1 kg of blue food dye, 5 kg of a food-grade expander were introduced. The Archimedean screw mixed the added substances for 15 minutes at room temperature. The resulting mixture was drawn at 130-150°C, obtaining granules which were water-cooled and dried. The granules were melted at 135°C and injection-moulded, obtaining flip-flops.

### EXAMPLE 2

Into an Archimedean-screw mixer 30 kg of rice flour, 30 kg of tapioca flour and 5 kg of buckwheat flour, 20 kg of rapeseed oil, 7 kg of polyurethane resin, 4 kg of casein, 1 kg of deodorant, 2 kg of a food-grade expander and 1 kg of Sienna dye were introduced. The Archimedean screw mixed the mixture for 2 hours. The obtained mixture was drawn at 110°C. The granules, after water-cooling, were dried and injection-moulded at 130°C, to manufacture stoppers.

### EXAMPLE 3

Into an Archimedean-screw mixer 10 kg of cassava flour, 10 kg of soft wheat flour and 20 kg of corn flour, 40 kg of soy bean oil, 15 kg of polyurethane resin, 2 kg of food-grade casein, 1 kg of a food-grade expander, 800 g of deodorant, 1.2 kg of bright-red, food-grade dye were introduced. The Archimedean screw mixed for an hour and a half, obtaining a red mixture. The obtained mixture was drawn at 170°C and injection-moulded at 135°C, obtaining children's dolls.

### EXAMPLE 4

A flip-flop manufactured in example 1 underwent composting. The mature mix is put into the reactor with bacteria at a temperature of 58°C, with a humidity rate of 40% in aerobic conditions.

After 90 days, degradation was of about 70%.

## Claims

1. Biodegradable plastic material, comprising a thermoplastic natural polymer consisting of a single-cereal or multi-cereal flour, a natural plasticiser and one or more synthetic polymer and/or copolymer resins, **characterised in that** it further comprises casein.

2. Plastic material as claimed in claim 1, **characterised in that** said flour is a flour produced from one or more cereals chosen among wheat, corn, buckwheat, barley, millet, rye, oats, sorghum, spelt, rice, cassava.

3. Plastic material as claimed in claim 1 or 2, **characterised in that** said natural plasticisers are vegetable oils.

4. Plastic material as claimed in claims 2 or 3, **characterised in that** said natural plasticiser is chosen among rapeseed oil, soy bean oil, palm oil, sunflower oil and citric acid esters, on their own or in combination with one another.

5. Plastic material as claimed in any one of the preceding claims, **characterised in that** said resin is a polyurethane resin.

6. Plastic material as claimed in any previous claim, **characterised in that** it comprises 50% by weight of cereal flour, 30% by weight of plasticiser, 10% by weight of resin, 9% by weight of casein and expander, dye and perfume q.s..

7. Use of a plastic material as claimed in any one of the preceding claims for manufacturing shoe soles, boots, clogs, slippers (including flip-flops), belts, bags, adhesive tape, plasters, bottles and containers, watch straps, book and exercise-book covers, children's toys, furniture items, inner parts of cars, stoppers, key rings, small household tools, medical apparatus, pens, glass frames.

## Patentansprüche

1. Biologisch abbaubares Kunststoffmaterial, umfassend ein thermoplastisches natürliches Polymer bestehend aus einem Einzelgetreide- oder Mehrgetreidemehl, einen natürlichen Weichmacher und ein oder mehrere synthetische Polymer- und/oder Copolymerharze, **dadurch gekennzeichnet, dass** es ferner Casein umfasst.

2. Kunststoffmaterial nach Anspruch 1, **dadurch gekennzeichnet, dass** das Mehl ein Mehl ist, das hergestellt ist aus einem oder mehreren Getreiden ausgewählt aus Weizen, Mais, Buchweizen, Gerste, Hirse, Roggen, Hafer, Sorghum, Dinkel, Reis, Cassava.

3. Kunststoffmaterial nach Anspruch 1 oder 2, **dadurch gekennzeichnet, dass** die natürlichen Weichmacher pflanzliche Öle sind.

4. Kunststoffmaterial nach Anspruch 2 oder 3, **dadurch gekennzeichnet, dass** der natürliche Weichmacher ausgewählt ist aus Rapsöl, Sojabohnenöl, Palmöl, Sonnenblumenöl und Zitronensäureestern, allein oder in Kombination miteinander.

5. Kunststoffmaterial nach einem der vorangehenden Ansprüche, **dadurch gekennzeichnet, dass** das Harz ein Polyurethanharz ist.

6. Kunststoffmaterial nach einem der vorangehenden Ansprüche, **dadurch gekennzeichnet, dass** es 50 Gewichtsprozent Getreidemehl, 30 Gewichtsprozent Weichmacher, 10 Gewichtsprozent Harz, 9 Gewichtsprozent Casein und Expander, Farbstoff und Parfum q.s. umfasst.

7. Verwendung eines Kunststoffmaterials nach einem der vorangehenden Ansprüche zur Herstellung von Schuhsolen, Stiefeln, Clogs, Latschen (einschließend Flip-Flops), Gürteln, Taschen, Klebeband, Pflaster, Flaschen und Behältern, Uhrenarmbändern, Buch-und Schreibheftumschlägen, Kinderspielzeugen, Möbelstücken, Innenteilen von Autos, Stopfen, Schlüsselringen, kleinen Haushaltswerkzeugen, medizinischen Apparaten, Stiften, Glasrahmen.

## Revendications

1. Matière plastique biodégradable, comprenant un polymère naturel thermoplastique consistant en une farine d'une céréale unique ou de plusieurs céréales, un plastifiant naturel et une ou plusieurs résines polymères et/ou copolymères synthétiques, **caractérisée en ce qu'**elle comprend en outre de la caséine.

2. Matière plastique suivant la revendication 1, **caractérisée en ce que** ladite farine est une farine produite à partir d'une ou plusieurs céréales choisies entre le blé, le maïs, le sarrasin, l'orge, le millet, le seigle, l'avoine, le sorgo, l'épeautre, le riz et le manioc.

3. Matière plastique suivant la revendication 1 ou 2, **caractérisée en ce que** lesdits plastifiants naturels sont des huiles végétales.

4. Matière plastique suivant la revendication 2 ou 3, **caractérisée en ce que** ledit plastifiant naturel est choisi entre l'huile de colza, l'huile de soja, l'huile de palme, l'huile de tournesol et des esters d'acide citrique, tels quels ou bien en association les uns avec les autres.

5. Matière plastique suivant l'une quelconque des revendications précédentes, **caractérisée en ce que** ladite résine est une résine de polyuréthanne.

6. Matière plastique suivant l'une quelconque des revendications précédentes, **caractérisée** on ce qu'elle comprend 50 % en poids d'une farine de céréale, 30 % en poids de plastifiant, 10 % en poids de résine, 9 % en poids de caséine et un diluant, un colorant et un parfum q.s.

7. Utilisation d'une matière plastique suivant l'une quelconque des revendications précédentes, pour la production de semelles de chaussures, de bottes, de sabots, de pantoufles (y compris des longues), de ceintures, de sacs, de rubans adhésifs, d'emplâtres, de bouteilles et de récipients, de bracelets pour des montres, de couvertures de livres et de manuels scolaires, de jouets pour enfants, d'articles d'ameublement, de pièces intérieures d'automobiles, de bouchons, de porte-clés, de petits outils domestiques, d'appareils médicaux, de stylos, de châssis de vitres.
